# EUROPEAN PATENT SPECIFICATION

(11) **EP 4 643 107 B1**
(45) Date of publication and mention of the grant of the patent: **02.12.2026**
(21) Application number: 23833605.1
(22) Date of filing: 22.12.2023
(51) Int. Cl.: G01M 15/14, G05B 23/02

(54) **ROOT CAUSE ANALYSIS OF ANOMALIES IN TURBOMACHINES**
GRUNDURSACHENANALYSE VON ANOMALIEN IN TURBOMASCHINEN
ANALYSE DE CAUSE PROFONDE D'ANOMALIES DANS DES TURBOMACHINES

(30) Priority: 27.12.2022 IT 202200026847
(43) Date of publication of application: 05.11.2025
(73) Proprietor: Nuovo Pignone S.r.l., 50100 Firenze (FI) (IT)
(72) Inventor: VENERI, Giacomo, 50127 Florence (IT); GORI, Valentina, 50127 Florence (IT); BARRIERE, Laure, 50127 Florence (IT); BALLARINI, Valeria, 50127 Florence (IT); GARDETTO, Andrea, 50127 Florence (IT)
(74) Representative: Novagraaf Group
(86) International application number: PCT/EP2023/025556
(87) International publication number: WO 2024/141175

(56) References cited:
- EP-A1- 3 239 684
- EP-A1- 3 974 930
- WO-A1-2017/139046
- US-A1- 2014 163 926
- US-A1- 2016 231 199
- US-A1- 2017 284 896
- US-A1- 2019 265 088
- CHOI HEEJEONG ET AL: "Explainable anomaly detection framework for predictive maintenance in manufacturing systems", APPLIED SOFT COMPUTING, ELSEVIER, AMSTERDAM, NL, vol. 125, 16 June 2022 (2022-06-16), XP087142218, ISSN: 1568-4946, [retrieved on 20220616], DOI: 10.1016/J.ASOC.2022.109147

## Description

### TECHNICAL FIELD

The subject matter disclosed herein relates to root cause analysis of anomalies in turbomachines.

### BACKGROUND ART

Even if a turbomachine is designed so to avoid anomalies and maintenance is aimed at preventing anomalies, anomalies do occur in turbomachines during their operation. An anomaly is a situation in a machine far from standard operability; a first example of anomaly is a vibration at a certain location of a machine having an amplitude higher than normal vibration amplitude at that location; a second example of anomaly is a rotation speed of a certain component of a machine higher than normal rotation speed amplitude of that component; a third example of anomaly is a temperature at a certain location of a machine having a value higher than normal temperature at that location; a fourth example of anomaly is a pressure in a certain duct or cavity of a machine having a value higher than normal pressure in that duct or cavity; a fifth example of anomaly is a flow in a certain duct of a machine having a value higher than normal flow in that duct or cavity. The expression "far from" should be interpreted as meaning that the difference between the standard value, e.g. the rated value, and the actual value is greater than a predetermined difference, e.g. a predetermined percentage difference; such predetermined difference is typically different from parameter to parameter, and may depend also for example on the operating status of machine.

Root cause analysis of anomalies in turbomachines, i.e. finding the reason why an anomaly in a turbomachine occurred in the past or is occurring at present, is very important for both the manufacturer and the user, but is very difficult to carry out reliably. The complexity of a turbomachine, for example a compressor or a turbine, and of the contest, for example in an Oil & Gas application, wherein it is installed and operates make this task even more difficult. In some cases, it is difficult even only precisely identifying an anomaly.

The technical literature discloses computer-implemented methods and computer-based systems that aim at fully automatically identifying anomalies in machines. Some anomalies are relatively easy to be identified. Other anomalies are difficult to be identified. In order to perform effectively and reliably, a common possibility is to carry out extensive testing of and training on each machine of interest. Usually, deep knowledge of the machine of interest and of the contest wherein it is installed and operates is a big advantage for a reliable solution.

Similarly, the technical literature discloses computer-implemented methods and computer-based systems that aim at fully automatically finding root causes of anomalies in machines. WO 2017/139046 A1 discloses unsupervised root cause analysis of machine failures. US 2016/231199 A1 discloses gas turbine profile monitoring. EP 3 239 684 A1 discloses fault diagnosis during testing of a turbine unit. US 2017/284896 A1 discloses unsupervised anomaly detection on industrial time series data. US 2019/265088 A1 discloses a system analysis apparatus. Such task is much more difficult, and effectiveness and reliability are much more challenging. Even in this case, extensive testing and training may be used for solving the problem.

Therefore, it would be desirable to have an easier approach root cause analysis of anomalies in turbomachines, in particular turbomachines for Oil & Gas applications, without sacrificing effectiveness and reliability.

The present invention is defined in the accompanying claims. According to a first aspect, the subject matter disclosed herein relates to a computer-implemented method according to claim 1 for root cause analysis of an anomaly in a turbomachine; the method comprises the steps of: a) receiving measurement data from a set of feature sensors installed on the turbomachine relating to a time frame, b) receiving an identifier of a target feature sensor, the anomaly appearing in its measurement data, c) receiving start time and end time of a non-anomalous time subframe when the anomaly does not occur, d) receiving start time and end time of an anomalous time subframe when the anomaly does occur, e) receiving identifiers of a plurality of feature sensors associated to features of the turbomachine that could be root causes of the anomaly, and f) deriving at least one feature of the turbomachine to be considered a root cause of the anomaly based on "contrastive analysis" of "feature importance" values of the feature sensors during the non-anomalous and the anomalous time subframes. The terms "contrastive analysis" and "feature importance" will be explained later in the detailed description.

According to other aspects, the subject matter disclosed herein relates to a computer-based system according to claim 11 and a turbomachine arrangement according to claims 15 and 16.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 shows a schematic block diagram of an embodiment of an innovative turbomachine arrangement including an innovative system,
Fig. 2 shows a flowchart of an embodiment of an innovative method for root cause analysis of an anomaly in a turbomachine, and
Fig. 3 shows a flowchart of a possible embodiment of one specific step of the method of Fig. 2.

### DETAILED DESCRIPTION OF EMBODIMENTS

As explained above, identifying an anomaly in a turbomachine is difficult and determining its root cause is even more difficult if a reliable result is desired. Therefore, it has been conceived to limit the task only to a simplified, still challenging, problem, but avoiding preliminary testing and training on the machine or machines. It is assumed that A) anomalies are identified, i.e. anomalous periods and non-anomalous periods are known, and B) possible causes for an anomaly are known. The task is to choose the best cause, i.e. the cause that is likely to be the true root cause of the anomaly. In general, the number of possible causes of an anomaly is high, for example from e.g. 10 to e.g. 100, and depends from anomaly to anomaly; for example, a vibration higher than normal may be caused by an anomalous flow value in any of a set of ducts, by an anomalous pressure value in any of a set of ducts, by an anomalous rotation speed of any of a set of components; the task is to choose which of the duct flows or duct pressure or component rotation speed caused or is causing an anomaly identified at a certain time. According to the subject matter disclosed herein, the problem is solved by "contrastive analysis", i.e. comparing anomalous and non-anomalous periods, and does not require any preliminary knowledge of any anomaly, in particular it requires no preliminary training.

Reference now will be made in detail to embodiments of the disclosure, examples of which are illustrated in the drawings. The examples and drawing figures are provided by way of explanation of the disclosure and should not be construed as a limitation of the disclosure. In fact, it will be apparent to those skilled in the art that various modifications and variations can be made in the present disclosure without departing from the scope or spirit of the disclosure. In the following description, similar reference numerals are used for the illustration of figures of the embodiments to indicate elements performing the same or similar functions. Moreover, for clarity of illustration, some references may be not repeated in all the figures.

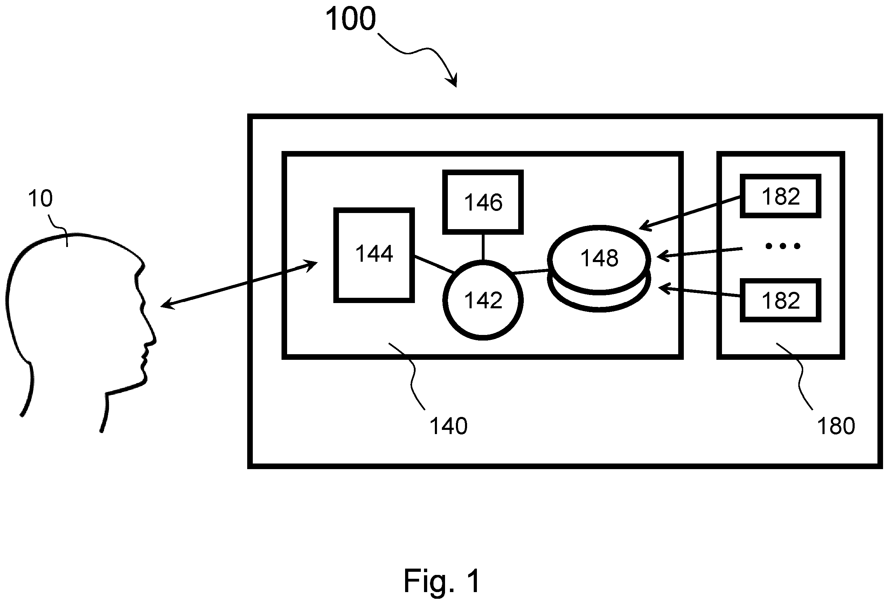

In Fig. 1, an embodiment of an innovative turbomachine arrangement 100 is shown in a very schematic way together with a user 10 thereof that interacts with arrangement 100. Arrangement 100 comprises a turbomachine 180 and an innovative computer-based system 140. User 10 may be an employee of a company that has manufactured turbomachine 180, or an employee of a company in charge of testing turbomachine 180, or an employee of a company that manages a plant where turbomachine 180 is installed. More in general, user 10 is a person or a team of persons interested in determining the root cause of an anomaly that occurred or is occurring in turbomachine 180; such need may repeat from time to time, at any new anomaly.

Arrangement 100 and variants thereof will be described more in detail afterwards. It is important to anticipate now that turbomachine 180 includes a set of feature sensors 182 installed thereon; the number of sensors 182 is high, for example 100-1000; sensors 182 repeatedly perform measurements of "features", that may also be called "variables", of the turbomachine such as for example temperatures, pressures, volumetric and mass flows, displacements, speeds (e.g. rotation speeds), accelerations, vibrations, valve opening levels, IGV set angular positions, IGV detected angular positions, gas compositions, burner statuses. Typically, sensors 182 are "real" sensors, i.e. devices that perform a measurement inside the turbomachine and determine/output a (analog or digital) signal whose amplitude corresponds to the value measured. Alternatively, according to the subject matter disclosed herein, one or more of the sensors may be so-called "virtual" sensors; as known, a "virtual" sensor is a piece of software running in a computer (it may be the same computer carrying out the inventive method) that repeatedly calculates e.g. a formula using as input data from one or more "real" sensors and producing as output data of the "virtual" sensor as if a machine would have a "real" sensor on-board instead of the "virtual" sensor.

System 140 receives in some way measurement data from sensors 182. Fig. 1 shows arrows between turbomachine 180 and system 140 that may be interpreted as (wired or wireless) connection(s), so that measurement data are received from turbomachine 180 directly. However, according to some embodiments, measurements data may be collected for example by a computer system (not shown in Fig. 1) at a certain time and then transferred to computer system 140 at a later time through a (wired or wireless) computer connection or through a data storage device just for analysis.

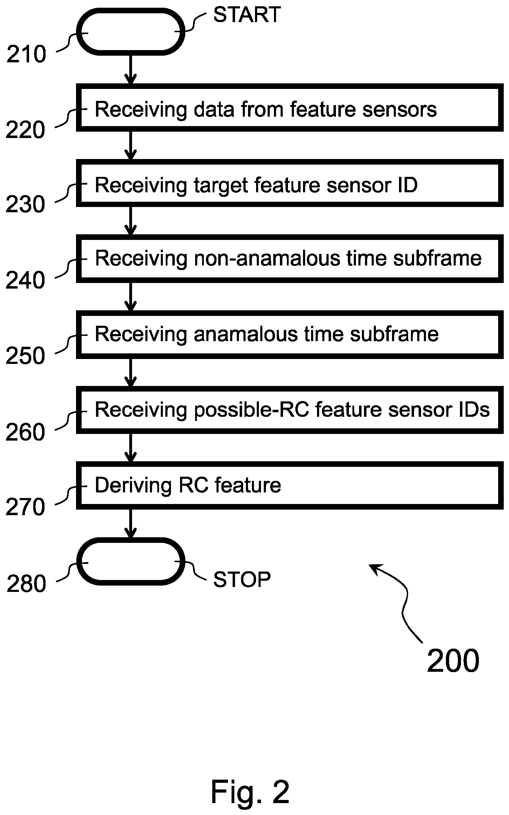

Fig. 2 shows a flowchart 200 of an embodiment of an innovative method for root cause analysis of an anomaly in a turbomachine, for example turbomachine 180 in Fig. 1; it is a computer-implemented method that may be implemented for example by computer system 140 in Fig. 1. The path of flowchart is followed from START block 210 to STOP block 280 at each anomaly identified - in general, it is to be expected that during operation of a turbomachine several anomalies occur typically one after the other; therefore, it may be repeated for example during study or examination of a turbomachine (i.e. offline) or during testing of the turbomachine or during operation of the turbomachine.

The innovative method comprises the steps of:
a) receiving (block 220) data from a set of feature sensors installed on the turbomachine, the data corresponding to measurements performed by the feature sensors of the set of feature sensors within a time frame,
b) receiving (block 230) an identifier of a feature sensor of the set of feature sensors, wherein the anomaly appears in measurement data from at least this feature sensor and this feature sensor is a target feature sensor for the anomaly,
c) receiving (block 240) a first start time and a first end time of a first time subframe, the first time subframe being contained within the above-mentioned time frame, wherein the anomaly does not occur during the first time subframe,
d) receiving (block 250) a second start time and a second end time of a second time subframe, the second time subframe being contained within the above-mentioned time frame, wherein the anomaly does occur during the second time subframe,
e) receiving (block 260) identifiers of a plurality of feature sensors of the set of feature sensors associated to features of the turbomachine that could be root causes of the anomaly, and
f) deriving (block 270) at least one feature of the turbomachine to be considered a root cause of the anomaly based on "contrastive analysis" of "feature importance" values of the feature sensors of the plurality of feature sensors during the first time subframe and during the second time subframe.

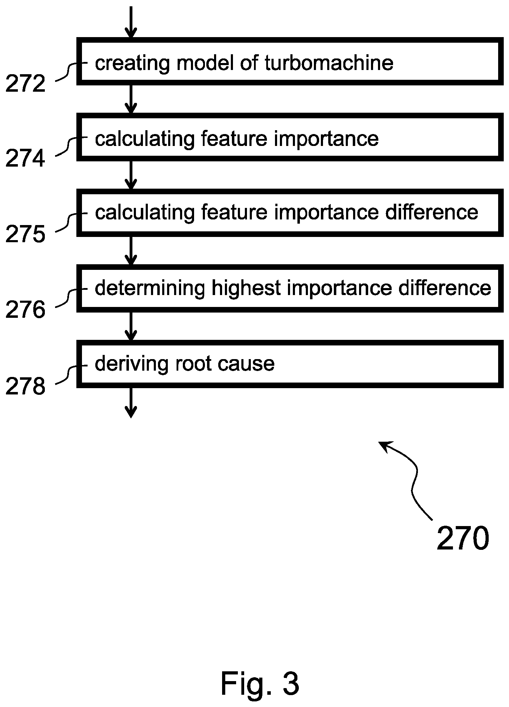

"Contrastive analysis" at step "f" means comparing anomalous periods and non-anomalous periods, in particular, "features importance" at anomalous periods and at non-anomalous periods; step "f" will be better explained later with the aid of Fig. 3. The term "feature importance" means the degree or level of the effect of an input feature, i.e. variable, on the output feature, i.e. variable. If a system is considered as a black box with several input variables and one output variable, any specific output value may be considered due to the effects of all input values; however, each input value may have contributed differently to the specific output value. The system may be associated to a "prediction model", that is usually very complex, and to an "explanation model", that should be quite simple for being easily understandable. A very effective type of "explanation model" is a linear function of binary variables so that "additive feature attribution methods" may be implemented. More details on this subject may be found e.g. in the article by Scott M. Lundberg and Su-In Lee, entitled "A unified approach to interpreting model predictions" in the Proceedings of the 31st International Conference on Neural Information Processing Systems - NIPS 2017.

Specifically, in step "f", at least one feature is chosen within a plurality of features, i.e. the features associated to the plurality of feature sensors mentioned at step "e". In particular, at step "f", a feature importance difference value of each feature sensor of the plurality of feature sensors is calculated and a highest feature importance difference value is determined therefrom. The reason why more than one feature may be obtained at step "f" will be explained later and is related to the fact that the innovative method may be used as an aid to a human being (or a team of human beings, e.g. technical experts) so that the final decision of which is the true root cause may be left for example to such human being (or a team of human beings, e.g. technical experts) based also on his expertise or may require further tests and/or investigations.

"Contrastive analysis" at step "f" according to the subject matter disclosed herein comprises:
- calculating a feature importance value of each feature sensor of said plurality of feature sensors, in particular as the feature contribution to the regression of the target variable, during said first time subframe and during said second time subframe,
- calculating a feature importance difference value of each feature sensor of said plurality of feature sensors, the feature importance difference value being a difference between the feature importance value during said first time subframe and the feature importance value during said second time subframe, and
- determining a high or the highest feature importance difference value between the calculated feature importance difference values.

Advantageously, feature importance values are calculated based on a model (typically, an explanation model) of the turbomachine that is a linear function of binary variables, the binary variables corresponding to features of the turbomachine corresponding to said plurality of feature sensors, as mentioned in e.g. the already cited article by Scott M. Lundberg and Su-In Lee.

According to some typical embodiments, one or more or all of the "receiving" steps, i.e. steps "b" and "c" and "d" and "e", includes receiving inputs from a user, for example user 10 in Fig. 1. This is especially true for steps "b" and "e", i.e. the identification of the target feature and the identification of possible root cause features.

According to some typical embodiments, the occurrence of an anomaly is judged by a human being based on human observation of the turbomachine and for example its measurement data.

Usually, the second time subframe, i.e. the "anomalous" time subframe, follows the first time subframe, i.e. the "non-anomalous" time subframe. Indeed, the anomaly may have started even at the end of the first time subframe, but its effects are not apparent during the first time subframe, not even at the end of the first time subframe. If a human being makes a wrong judgement, the innovative method still provides good results if only few pieces of measurement data in the first time subframe are collected while the anomaly is occurring.

In the above steps "b" and "e", reference is made to "identifiers" as means for identifying sensors and features of the turbomachine.

In the above steps "c" and "d", reference is made to "start time" and "end time" as means for identifying "time subframes". Equivalently, a "time subframe" may be identified for example by a "start time" and a "duration" or an "end time" and a "duration".

According to advantageous embodiments, for example the embodiment of Fig. 3, step "f" comprises the sub-steps of:
f1) creating (block 272) a model (typically, an explanation model) of the turbomachine based on the measurement data received (in particular measurements data in the first time subframe, i.e. the "non-anomalous" time subframe), the model having as input at least features of the turbomachine corresponding to the plurality of feature sensors and as output at least a feature of the turbomachine corresponding to the target feature sensor,
f2) calculating (block 274) a feature importance value of each feature sensor of the plurality of feature sensors, separately during the first time subframe and the second time subframe, with respect to measurement data from at least the target feature sensor, based on the model created at sub-step "f1",
f3) calculating (block 275) a feature importance difference value of each feature sensor of the plurality of feature sensors, the feature importance difference value being a difference between a feature importance value during the first time subframe and a feature importance value during the second time subframe, based on the feature importance values calculated at sub-step "f2",
f4) determining (block 276) a highest feature importance difference value between the feature importance difference values calculated at sub-step "f3", and
f5) deriving (block 278) from the highest feature importance difference value determined at sub-step "f4" an associated feature of the turbomachine to be considered root cause of the anomaly.

The model at sub-step "f1" is advantageously a regressive model that, more advantageously, may be implemented through a recurrent neural network, in particular a neural network of the type LSTM (= "Long Short-Term Memory"). Such model, in particular the neural network, is trained to predict the target feature based on measurements data of the input features sensors using data received at step "a".

According to advantageous embodiments, sub-step "f2" is implemented through an explainability method applied on top of the model created at sub-step "f1" and based on a Shapley values related technique, in particular SHAP values (see e.g. the already cited article by Scott M. Lundberg and Su-In Lee that provides general explanations on Shapley values related techniques and specific description of SHAP values). Such explainability method arises from game theory and basically attributes to each feature a value corresponding to the change in the expected model prediction when conditioning on that feature. The basic procedure behind such explainability method is to retrain the model on all possible feature subsets S of F, where F is the set of all features, and to assign an importance value to each feature, that represents the effect on the model prediction of including that feature. To compute this effect, a model is trained with that feature present, and another model is trained with the feature withheld. Since the effect of withholding a feature depends on other features in the model (collinearity effect), the preceding differences are computed for all possible features subsets. The Shapley values are then computed and used as feature attributions. They are a weighted average of all possible differences of predictions obtained with and without a certain feature. Usually this calculation is approximated in order to speed up the procedure.

Preferably, the working conditions of the turbomachine in the first time subframe and the working conditions of the turbomachine in the second time subframe are similar. Similarity may be based on the values of input features; for example, similar conditions may mean, for a compressor, within a same rotation speed range and/or within a same suction pressure range and/or within a same discharge pressure range. Similarity may be based on the values of output features, i.e. on effects; same conditions may mean that, if there should be no anomaly, the target feature should have the same value or be within the same value range. From the practical point of view, similarity may be based on time proximity; similarity is likely if the first time subframe and the second time subframe are consecutive or timely close to each other (for example, time distance less than 10% or 20% or 50% or 100% of duration of first time subframe or second time subframe).

According to some advantageous embodiments:
at sub-step "f4", a set of highest feature importance difference values is determined, and
at sub-step "f5", the feature importance difference values of the set of highest feature importance difference values are ranked and correspondingly associated features of the turbomachine are ranked as root causes of said anomaly.
In this way, some features are provided as possible root causes of the anomaly and they are ordered according to the probability of being the true root cause.

According to some advantageous embodiments, at sub-step "f5", a confidence value is determined for the determination of the root cause of the anomaly. In particular, sub-steps "f1" and "f2" and "f3" and "f4" and "f5" are repeated based on different initialization of the weights of the neural network; for each repetition a distinct feature ranking is obtained; for each feature a mean value of its ranking position is determined and a variance of its ranking position; the confidence of a feature being the root cause of the analysis is the inverse of its variance.

The method for root cause analysis of an anomaly in a turbomachine herein described and claimed may be implemented through a computer-based system, for example system 140 in Fig. 1 being configured to carry out method. The system may comprise essentially a processor, for example processor 142 in Fig. 1, a memory, for example memory 146 in Fig. 1, connected to processor 142 and configured to store program and data, and a human I/O interface, for example human I/O interface 144, connected to processor 142. These components 142, 144 and 146 are the key components of a computer; therefore, system 140 may be for example a so-called "workstation" or a so-called "server" or even a so-called "cluster" of computers. In order to carry out the innovative method, an appropriate computer program is stored in the memory. In order to carry out the method, input from user 10 is received from the human I/O interface and sent to the processor. As already described, the innovative system is configured to receive in some way measurement data from a turbomachine (see e.g. arrows in Fig. 1). A typical possibility is that system 140 includes a database 148 for storing data, specifically measurement data, from one or more turbomachines. Transferring measurement data from turbomachines to a computer located remotely from the turbomachines and storing them in a database positioned inside the computer or coupled to the computer is known in the art and is outside of the scope of protection of the present patent application.

According to some embodiments, the innovative system is configured to carry out the innovative method offline. In other words, measurement data may have been transferred from the turbomachines to the database well before (for example one hour, or one day or one month before) being processed according to the method disclosed herein.

According to other embodiments, the innovative system, for example system 140 in Fig. 1, is configured to carry out the innovative method during operation of the turbomachine (or the turbomachines), for example turbomachine 180 in Fig. 1.

According to possible embodiments, the innovative system, for example system 140 in Fig. 1, may be configured to identify one or more anomalies (not necessarily all) or one or more types of anomaly (not necessarily all) in the turbomachine, for example turbomachine 180 in Fig. 1, in an automatic way. For example, an appropriate piece of software may be stored in the memory of the system, for example memory 146 in Fig. 1, in order to perform such task and provide info to the piece of software implementing the innovative method. The appropriate piece of software may be also able to identify an "anomalous" time subframe and a "non-anomalous" time subframe and provide them to the piece of software implementing the innovative method.

As shown in Fig. 1, the innovative system may be integrated in a turbomachine arrangement, for example arrangement 100 in Fig. 1. Such system comprises essentially a turbomachine, for example turbomachine 180 in Fig. 1, and an innovative system, for example system 140 in Fig. 1.

Understanding a root cause of an anomaly in a turbomachine is useful not only in order to get more/better knowledge of this turbomachine and/or to design better this turbomachine or a similar turbomachine (in particular one or more turbomachine components). In fact, based on the root cause (or the causes) identified, according to some embodiments, it is possible to trigger an alert/alarm (audible or visual) for a user when the turbomachine is operating (in the field or during testing) and/or to take some actions for example though a computer controlling on the turbomachine or on one or more sub-systems of the turbomachine or coupled to the turbomachine. An action may be motivated for example by a safety concern or an efficiency objective. An action may be for example shut down of the turbomachine or activation of a security system or sub-system or change in the regulation of a component (e.g. opening or closing of a valve).

## Claims

1. A computer-implemented method for root cause analysis of an anomaly in a turbomachine, wherein the method comprises the steps of:
a) receiving (220) data from a set of feature sensors installed on the turbomachine, the data corresponding to measurements performed by the feature sensors of said set of feature sensors within a time frame,
b) receiving (230) an identifier of a feature sensor of said set of feature sensors, wherein said anomaly appears in measurement data from at least said feature sensor and said feature sensor is a target feature sensor for said anomaly,
c) receiving (240) a first start time and a first end time of a first time subframe, the first time subframe being contained within said time frame, wherein said anomaly does not occur during said first time subframe,
d) receiving (250) a second start time and a second end time of a second time subframe, the second time subframe being contained within said time frame, wherein said anomaly does occur during the second time subframe, and
e) receiving (260) identifiers of a plurality of feature sensors of said set of feature sensors associated to features of the turbomachine that could be root causes of said anomaly, **characterized by**
f) deriving (270) at least one feature of the turbomachine to be considered a root cause of said anomaly based on contrastive analysis of feature importance values of the feature sensors of said plurality of feature sensors during said first time subframe and during said second time subframe; wherein said contrastive analysis at step "f" (270) comprises:
- calculating a feature importance value of each feature sensor of said plurality of feature sensors, during said first time subframe and during said second time subframe,
- calculating a feature importance difference value of each feature sensor of said plurality of feature sensors, the feature importance difference value being a difference between the feature importance value during said first time subframe and the feature importance value during said second time subframe, and
- determining a high or the highest feature importance difference value between the calculated feature importance difference values.

2. The method of claim 1,
wherein feature importance values are calculated based on a model of the turbomachine that is a linear function of binary variables, the binary variables corresponding to features of the turbomachine corresponding to said plurality of feature sensors.

3. The method of claim 1, wherein step f comprises the sub-steps of:
f1) creating (272) a model of the turbomachine based on said measurement data, said model having as input at least features of the turbomachine corresponding to said plurality of feature sensors and as output at least a feature of the turbomachine corresponding to said target feature sensor,
f2) calculating (274) a feature importance value of each feature sensor of said plurality of feature sensors, during said first time subframe and during said second time subframe, with respect to measurement data from at least said target feature sensor, based on said model created at sub-step "f1",
f3) calculating (275) a feature importance difference value of each feature sensor of said plurality of feature sensors, the feature importance difference value being a difference between a feature importance value during said first time subframe and a feature importance value during said second time subframe, based on the feature importance values calculated at sub-step "f2",
f4) determining (276) a highest feature importance difference value between the feature importance difference values calculated at sub-step "f3", and
f5) deriving (278) from the highest feature importance difference value determined at sub-step "f4" an associated feature of the turbomachine to be considered root cause of said anomaly.

4. The method of claim 3,
wherein said model at sub-step "f1" (272) is a regressive model.

5. The method of claim 4,
wherein said model at sub-step "f1" (272) is implemented through a recurrent neural network.

6. The method of claim 5,
wherein said model at sub-step "f1" (272) is implemented through a neural network of the type LSTM.

7. The method of claim 1,
wherein sub-step "f2" (274) is performed through Shapley values related techniques.

8. The method of claim 1,
wherein the working conditions of the turbomachine in said first time subframe and the working conditions of the turbomachine in said second time subframe are similar.

9. The method of claim 3,
wherein at sub-step f4 (276), a set of highest feature importance difference values is determined, and
wherein at sub-step f5 (278), the feature importance difference values of said set of highest feature importance difference values are ranked and correspondingly associated features of the turbomachine are ranked as root causes of said anomaly.

10. The method of claim 3,
wherein at sub-step f5 (278) a confidence value is determined for the determination of the root cause of said anomaly.

11. A computer-based system (140) configured to carry out the root cause analysis method according claim 1.

12. The computer-based system (140) of claim 11, wherein it is configured to carry out the method according claim 1 during operation of the turbomachine (180).

13. The computer-based system (140) of claim 12, wherein it is configured to trigger an alert/alarm based on a root cause identified through the method.

14. The computer-based system (140) of claim 12, wherein it is configured to take actions on the turbomachine (180) or on one or more sub-systems of the turbomachine (180) or coupled to the turbomachine (180) based on a root cause identified through the method.

15. A turbomachine arrangement (100) comprising a turbomachine (180) and a system (140) according to claim 11.

16. A turbomachine arrangement (100) comprising a turbomachine (180) and a system (140) according to claim 12.

## Patentansprüche

1. Computerimplementiertes Verfahren zum Analysieren der Grundursache einer Anomalie in einer Turbomaschine, wobei das Verfahren die Schritte umfasst:
a) Empfangen (220) von Daten von einem Satz von Merkmalssensoren, die an der Turbomaschine installiert sind, wobei die Daten Messungen entsprechen, die von den Merkmalssensoren des Satzes von Merkmalssensoren innerhalb eines Zeitrahmens durchgeführt werden,
b) Empfangen (230) einer Kennung eines Merkmalsensors des Satzes von Merkmalsensoren, wobei die Anomalie in Messdaten von mindestens dem Merkmalsensor auftritt und der Merkmalsensor ein Zielmerkmalsensor für die Anomalie ist,
c) Empfangen (240) einer ersten Startzeit und einer ersten Endzeit eines ersten Zeitunterrahmens, wobei der erste Zeitunterrahmen innerhalb des Zeitrahmens enthalten ist, wobei die Anomalie während des ersten Zeitunterrahmens nicht auftritt,
d) Empfangen (250) einer zweiten Startzeit und einer zweiten Endzeit eines zweiten Zeitunterrahmens, wobei der zweite Zeitunterrahmen innerhalb des Zeitrahmen enthalten ist, wobei die Anomalie während des zweiten Zeitunterrahmens auftritt, und
e) Empfangen (260) von Kennungen einer Vielzahl von Merkmalssensoren des Satzes von Merkmalssensoren, die Merkmalen der Turbomaschine zugeordnet sind, die Grundursachen der Anomalie sein könnten, **gekennzeichnet durch**
f) Ableiten (270) mindestens eines Merkmals der Turbomaschine, das als eine Grundursache der Anomalie zu betrachten ist, basierend auf einer kontrastiven Analyse von Merkmalswichtigkeitswerten der Merkmalssensoren der Vielzahl von Merkmalssensoren während des ersten Zeitunterrahmens und während des zweiten Zeitunterrahmens; wobei die kontrastive Analyse in Schritt "f" (270) umfasst:
- Berechnen eines Merkmalswichtigkeitswerts jedes Merkmalssensors der Vielzahl von Merkmalssensoren während des ersten Zeitunterrahmens und während des zweiten Zeitunterrahmens,
- Berechnen eines Merkmalswichtigkeitsdifferenzwerts jedes Merkmalssensors der Vielzahl von Merkmalssensoren, wobei der Merkmalswichtigkeitsdifferenzwert eine Differenz zwischen dem Merkmalswichtigkeitswert während des ersten Zeitunterrahmens und dem Merkmalswichtigkeitswert während des zweiten Zeitunterrahmens ist, und
- Bestimmen eines hohen oder des höchsten Merkmalswichtigkeitsdifferenzwerts zwischen den berechneten Merkmalswichtigkeitsdifferenzwerten.

2. Verfahren nach Anspruch 1,
wobei Merkmalswichtigkeitswerte basierend auf einem Modell der Turbomaschine berechnet werden, das eine lineare Funktion von binären Variablen ist, wobei die binären Variablen Merkmalen der Turbomaschine entsprechen, die der Vielzahl von Merkmalssensoren entsprechen.

3. Verfahren nach Anspruch 1, wobei der Schritt f die Teilschritte umfasst:
f1) Erstellen (272) eines Modells der Turbomaschine basierend auf den Messdaten, wobei das Modell als Eingabe mindestens Merkmale der Turbomaschine, die der Vielzahl von Merkmalssensoren entsprechen, und als Ausgabe mindestens ein Merkmal der Turbomaschine, das dem Zielmerkmalssensor entspricht, aufweist,
f2) Berechnen (274) eines Merkmalswichtigkeitswerts jedes Merkmalssensors der Vielzahl von Merkmalssensoren, während des ersten Zeitunterrahmens und während des zweiten Zeitunterrahmens, in Bezug auf Messdaten von mindestens dem Zielmerkmalssensor, basierend auf dem in Teilschritt "f1" erstellten Modell,
f3) Berechnen (275) eines Merkmalswichtigkeitsdifferenzwerts jedes Merkmalsensors der Vielzahl von Merkmalsensoren, wobei der Merkmalswichtigkeitsdifferenzwert eine Differenz zwischen einem Merkmalswichtigkeitswert während des ersten Zeitunterrahmens und einem Merkmalswichtigkeitswert während des zweiten Zeitunterrahmens ist, basierend auf den in Teilschritt "f2" berechneten Merkmalswichtigkeitswerten,
f4) Bestimmen (276) eines höchsten Merkmalswichtigkeitsdifferenzwerts zwischen den in Teilschritt "f3" berechneten Merkmalswichtigkeitsdifferenzwerten,
und
f5) Ableiten (278), aus dem in Teilschritt "f4" bestimmten höchsten Merkmalswichtigkeitsdifferenzwert, eines zugehörigen Merkmals der Turbomaschine, das als Grundursache der Anomalie zu betrachten ist.

4. Verfahren nach Anspruch 3,
wobei das Modell in Teilschritt "f1" (272) ein regressives Modell ist.

5. Verfahren nach Anspruch 4,
wobei das Modell in Teilschritt "f1" (272) durch ein rekurrentes neuronales Netzwerk implementiert ist.

6. Verfahren nach Anspruch 5,
wobei das Modell in Teilschritt "f1" (272) durch ein neuronales Netzwerk des Typs LSTM implementiert ist.

7. Verfahren nach Anspruch 1,
wobei Teilschritt "f2" (274) durch auf Shapley-Werte bezogene Techniken durchgeführt wird.

8. Verfahren nach Anspruch 1,
wobei die Arbeitsbedingungen der Turbomaschine in dem ersten Zeitunterrahmen und die Arbeitsbedingungen der Turbomaschine in dem zweiten Zeitunterrahmen ähnlich sind.

9. Verfahren nach Anspruch 3,
wobei in Teilschritt f4 (276) ein Satz von höchsten Merkmalswichtigkeitsdifferenzwerten bestimmt wird, und
wobei in Teilschritt f5 (278) die Merkmalswichtigkeitsdifferenzwerte des Satzes von höchsten Merkmalswichtigkeitsdifferenzwerten in eine Rangfolge gebracht werden und entsprechend zugeordnete Merkmale der Turbomaschine als Grundursachen der Anomalie in eine Rangfolge gebracht werden.

10. Verfahren nach Anspruch 3,
wobei in Teilschritt f5 (278) ein Konfidenzwert für die Bestimmung der Grundursache der Anomalie bestimmt wird.

11. Computerbasiertes System (140), das konfiguriert ist, um das Verfahren zum Analysieren der Grundursache nach Anspruch 1 auszuführen.

12. Computerbasiertes System (140) nach Anspruch 11, wobei es konfiguriert ist, um das Verfahren nach Anspruch 1 während des Betriebs der Turbomaschine (180) auszuführen.

13. Computerbasiertes System (140) nach Anspruch 12, wobei es konfiguriert ist, um eine Warnung/einen Alarm basierend auf einer durch das Verfahren identifizierten Grundursache auszulösen.

14. Computerbasiertes System (140) nach Anspruch 12, wobei es konfiguriert ist, um basierend auf einer durch das Verfahren identifizierten Grundursache Maßnahmen an der Turbomaschine (180) oder an einem oder mehreren Teilsystemen der Turbomaschine (180) oder an die Turbomaschine (180) gekoppelt zu ergreifen.

15. Turbomaschinenanordnung (100), umfassend eine Turbomaschine (180) und ein System (140) nach Anspruch 11.

16. Turbomaschinenanordnung (100), umfassend eine Turbomaschine (180) und ein System (140) nach Anspruch 12.

## Revendications

1. Procédé mis en œuvre par ordinateur pour l'analyse de cause profonde d'une anomalie dans une turbomachine, dans lequel le procédé comprend les étapes consistant à :
a) recevoir (220) des données à partir d'un ensemble de capteurs de caractéristiques installés sur la turbomachine, les données correspondant à des mesures effectuées par les capteurs de caractéristiques dudit ensemble de capteurs de caractéristiques au sein d'une trame temporelle,
b) recevoir (230) un identifiant d'un capteur de caractéristiques dudit ensemble de capteurs de caractéristiques, dans lequel ladite anomalie apparaît dans des données de mesure à partir d'au moins ledit capteur de caractéristiques et ledit capteur de caractéristiques est un capteur de caractéristiques cible pour ladite anomalie,
c) recevoir (240) un premier moment de début et un premier moment de fin d'une première sous-trame temporelle, la première sous-trame temporelle étant contenue au sein de ladite trame temporelle, dans lequel ladite anomalie ne se produit pas pendant ladite première sous-trame temporelle,
d) recevoir (250) un second moment de début et un second moment de fin d'une seconde sous-trame temporelle, la seconde sous-trame temporelle étant contenue au sein de ladite trame temporelle, dans lequel ladite anomalie se produit pendant la seconde sous-trame temporelle, et
e) recevoir (260) des identifiants d'une pluralité de capteurs de caractéristiques dudit ensemble de capteurs de caractéristiques associés à des caractéristiques de la turbomachine qui pourraient être des causes profondes de ladite anomalie, **caractérisé par**
f) la déduction (270) d'au moins une caractéristique de la turbomachine devant être considérée comme cause profonde de ladite anomalie sur la base d'une analyse contrastive de valeurs d'importance de caractéristique des capteurs de caractéristiques parmi ladite pluralité de capteurs de caractéristiques pendant ladite première sous-trame temporelle et pendant ladite seconde sous-trame temporelle ; dans lequel ladite analyse contrastive à l'étape « f » (270) comprend :
- la calcul d'une valeur d'importance de caractéristique de chaque capteur de caractéristiques parmi ladite pluralité de capteurs de caractéristiques, pendant ladite première sous-trame temporelle et pendant ladite seconde sous-trame temporelle,
- la calcul d'une valeur de différence d'importance de caractéristique de chaque capteur de caractéristiques parmi ladite pluralité de capteurs de caractéristiques, la valeur de différence d'importance de caractéristique étant une différence entre la valeur d'importance de caractéristique pendant ladite première sous-trame temporelle et la valeur d'importance de caractéristique pendant ladite seconde sous-trame temporelle, et
- la détermination d'une valeur de différence d'importance de caractéristique élevée ou la plus élevée parmi les valeurs de différence d'importance de caractéristique calculées.

2. Procédé selon la revendication 1,
dans lequel des valeurs d'importance de caractéristique sont calculées sur la base d'un modèle de la turbomachine qui est une fonction linéaire de variables binaires, les variables binaires correspondant à des caractéristiques de la turbomachine correspondant à ladite pluralité de capteurs de caractéristiques.

3. Procédé selon la revendication 1, dans lequel l'étape f comprend les sous-étapes consistant à :
f1) créer (272) un modèle de la turbomachine sur la base desdites données de mesure, ledit modèle ayant, comme entrée, au moins des caractéristiques de la turbomachine correspondant à ladite pluralité de capteurs de caractéristiques et comme sortie, au moins une caractéristique de la turbomachine correspondant audit capteur de caractéristiques cible,
f2) calculer (274) une valeur d'importance de caractéristique de chaque capteur de caractéristiques parmi ladite pluralité de capteurs de caractéristiques, pendant ladite première sous-trame temporelle et pendant ladite seconde sous-trame temporelle, par rapport à des données de mesure à partir d'au moins ledit capteur de caractéristiques cible, sur la base dudit modèle créé à la sous-étape « f1 »,
f3) calculer (275) une valeur de différence d'importance de caractéristique de chaque capteur de caractéristiques parmi ladite pluralité de capteurs de caractéristiques, la valeur de différence d'importance de caractéristique étant une différence entre une valeur d'importance de caractéristique pendant ladite première sous-trame temporelle et une valeur d'importance de caractéristique pendant ladite seconde sous-trame temporelle, sur la base des valeurs d'importance de caractéristique calculées à la sous-étape « f2 »,
f4) déterminer (276) une valeur de différence d'importance de caractéristique la plus élevée parmi les valeurs de différence d'importance de caractéristique calculées à la sous-étape « f3 »,
et
f5) déduire (278), à partir de la valeur de différence d'importance de caractéristique la plus élevée déterminée à la sous-étape « f4 », une caractéristique associée de la turbomachine devant être considérée comme cause profonde de ladite anomalie.

4. Procédé selon la revendication 3,
dans lequel ledit modèle à la sous-étape « f1 » (272) est un modèle régressif.

5. Procédé selon la revendication 4,
dans lequel ledit modèle à la sous-étape « f1 » (272) est mis en œuvre au moyen d'un réseau de neurones récurrent.

6. Procédé selon la revendication 5,
dans lequel ledit modèle à la sous-étape « f1 » (272) est mis en œuvre par un réseau de neurones de type LSTM.

7. Procédé selon la revendication 1,
dans lequel la sous-étape « f2 » (274) est effectuée au moyen de techniques liées aux valeurs de Shapley.

8. Procédé selon la revendication 1,
dans lequel les conditions de fonctionnement de la turbomachine dans ladite première sous-trame temporelle et les conditions de fonctionnement de la turbomachine dans ladite seconde sous-trame temporelle sont similaires.

9. Procédé selon la revendication 3,
dans lequel, à la sous-étape f4 (276), un ensemble de valeurs de différence d'importance de caractéristique les plus élevées est déterminé, et
dans lequel, à la sous-étape f5 (278), les valeurs de différence d'importance de caractéristique dudit ensemble de valeurs de différence d'importance de caractéristique les plus élevées sont classées et des caractéristiques associées de manière correspondante de la turbomachine sont classées comme causes profondes de ladite anomalie.

10. Procédé selon la revendication 3,
dans lequel, à la sous-étape f5 (278), une valeur de confiance est déterminée pour la détermination de la cause profonde de ladite anomalie.

11. Système (140) informatique configuré pour mettre en œuvre le procédé d'analyse de cause profonde selon la revendication 1.

12. Système (140) informatique selon la revendication 11, dans lequel il est configuré pour mettre en œuvre le procédé selon la revendication 1 pendant le fonctionnement de la turbomachine (180).

13. Système (140) informatique selon la revendication 12, dans lequel il est configuré pour déclencher une alerte/alarme sur la base d'une cause profonde identifiée grâce au procédé.

14. Système (140) informatique selon la revendication 12, dans lequel il est configuré pour prendre des mesures sur la turbomachine (180) ou sur un ou plusieurs sous-systèmes de la turbomachine (180) ou couplés à la turbomachine (180) sur la base d'une cause profonde identifiée grâce au procédé.

15. Agencement de turbomachine (100) comprenant une turbomachine (180) et un système (140) selon la revendication 11.

16. Agencement de turbomachine (100) comprenant une turbomachine (180) et un système (140) selon la revendication 12.
